# EUROPÄISCHE PATENTSCHRIFT

(11) **EP 3 104 057 B1**
(45) Veröffentlichungstag und Bekanntmachung des Hinweises auf die Patenterteilung: **31.07.2019**
(21) Anmeldenummer: 16172881.1
(22) Anmeldetag: 03.06.2016
(51) Int. Cl.: F16L 47/02, B29C 65/00

(54) **ROHRVERBINDUNG MIT ZUMINDEST ZWEI ROHREN MIT ROHRWANDUNGEN AUS EINEM KUNSTSTOFF-MONOMATERIAL**
PIPE JOINT WITH AT LEAST TWO PIPES WITH PIPE WALL MADE FROM A PLASTIC MONO MATERIAL
RACCORD DE TUYAUTERIE COMPRENANT AU MOINS DEUX TUYAUX AVEC PAROIS DE TUYAU EN PLASTIQUE

(30) Priorität: 08.06.2015 AT 3562015
(43) Veröffentlichungstag der Anmeldung: 14.12.2016
(73) Patentinhaber: Jansen AG, 9463 Oberriet (CH)
(72) Erfinder: Brülisauer, Urs, 9463 Oberriet (CH); Dietsche, Mathias, 9451 Kriessern (CH); Eggert, Dominik, 8046 Zürich (CH); Werner, Uwe, 8825 Hütten (CH)
(74) Vertreter: Fechner, Thomas

(56) Entgegenhaltungen:
- EP-A1- 2 730 829
- EP-A2- 1 375 114
- WO-A1-02/04209
- CH-A- 334 038
- DE-A1- 19 718 790
- DE-B- 1 215 349
- JP-A- 2004 301 197

## Beschreibung

Die vorliegende Erfindung betrifft eine Rohrverbindung mit zumindest zwei Rohren mit Rohrwandungen aus einem, insbesondere demselben, Kunststoff-Monomaterial, wobei ein Endabschnitt einer Rohrwandung eines der Rohre mit einem Endabschnitt einer Rohrwandung des anderen der Rohre durch Verschmelzen verbunden ist, wobei die Endabschnitte, in radialer Richtung gesehen, in einem inneren Verbindungsbereich und in einem äußeren Verbindungsbereich der Rohrverbindung direkt miteinander verschmolzen sind, wobei der innere Verbindungsbereich und der äußere Verbindungsbereich, in einem Längsschnitt durch die Rohrverbindung gesehen, winkelig zueinander ausgerichtet sind.

Derartige Rohrverbindungen werden zur Verbindung von Rohren verwendet, welche der Durchleitung von Fluiden, wie z.B. Erdgas, Trinkwasser oder Abwasser dienen. Das Fluid kann dabei gegenüber dem Umgebungsdruck einen Überdruck aufweisen, z.B. im Falle von Trinkwasser oder Erdgas. Neben miteinander steckbar und wieder lösbar verbindbaren Rohrverbindungen sind auch Rohrverbindungen bekannt, bei denen die Rohre direkt miteinander verschmolzen oder indirekt mittels einer separaten Schweißmuffe verbunden sind, welche mit den jeweiligen Endabschnitten der Rohre verschmolzen ist.

Durch Vorbenutzung ist es bekannt, die zu verbindenden Rohre stumpf, d.h. durch Verschmelzen der vorher erwärmten kreisringförmigen Stirnflächen eines jeweiligen Endabschnitts der Rohre, miteinander unter Ausübung einer Kraft zu verbinden. Beim stumpfen Verbinden von Rohren durch Verschmelzen entstehen Wulste bzw. Wülste, die aus überschüssigem, aufgeschmolzenem Kunststoff bestehen und an der Innenseite der Rohrverbindung den Durchflussquerschnitt der Rohrverbindung im Bereich der Nahtstelle vermindern. An der Außenseite der Rohrverbindung entstehende Wulste bzw. Wülste vergrößern die Außenabmessungen der Rohrverbindung und erschweren das Einziehen oder Vertiefen der miteinander verbundenen Rohre ins Erdreich.

Eine weitere Möglichkeit zur Verbindung von Kunststoff-Rohren besteht darin, die Rohre durch Verschmelzen von Mantelflächen der Endabschnitte miteinander zu verbinden. Dabei wird ein Rohr mit einem männlichen Endabschnitt mit einem Rohr mit einem weiblichen Endabschnitt verbunden. Die Wandstärke des weiblichen Endabschnitts muss insbesondere bei Anwendungen zur Durchleitung von gegenüber der Umgebung unter Überdruck stehenden Fluiden relativ groß gewählt werden, um eine tragfähige Rohrverbindung zu schaffen. Die den männlichen Endabschnitt umgebende Rohrwandung des weiblichen Endabschnitts weist einen entsprechend großen Außendurchmesser auf, weshalb der Materialeinsatz hoch ist und die Rohrverbindung eine relativ große Gesamtabmessung aufweist.

In der CH 334 038 A ist eine Vorrichtung zum Verschweißen von Rohren gezeigt, mit welcher die Mantelflächen und die Stirnflächen der zu verbindenden Rohre vor dem Zusammenfügen der Rohre erwärmbar sind. Diese Vorrichtung ermöglicht es, eine Rohrverbindung herzustellen, die winkelig zueinander ausgerichtete innere und äußere Verbindungsbereiche aufweist.

Aus der DE 197 18 790 A1 geht eine Rohrverbindung mit winkelig zueinander ausgerichteten inneren und äußeren Verbindungsbereichen hervor. Gemäß dieser Schrift sind in den Verbindungsbereichen Heizwendeln zum Erwärmen der zu verbindenden Flächen angeordnet, welche nach dem Erkalten des Kunststoffs im Verbindungsbereich verbleiben.

Weitere Beispiele von Rohrverbindungen mit winkelig zueinander ausgerichteten inneren und äußeren Verbindungsbereichen gehen auch aus der JP 2004 301197 A und der DE 1 215 349 B1 hervor.

Aufgabe der Erfindung ist es, eine verbesserte Rohrverbindung der eingangs genannten Art bereitzustellen, bei der eine druckfeste Rohrverbindung mit dünnwandigen Rohrwandungen bereitgestellt werden kann.

Erfindungsgemäß gelingt dies durch eine Rohrverbindung mit den Merkmalen des Anspruchs 1.

Bei der Rohrverbindung gemäß der Erfindung ist vorgesehen, dass die Endabschnitte, in radialer Richtung gesehen, in einem inneren Verbindungsbereich und in einem äußeren Verbindungsbereich der Rohrverbindung direkt miteinander verschmolzen sind, wobei der innere Verbindungsbereich und der äußere Verbindungsbereich, in einem Längsschnitt durch die Rohrverbindung gesehen, winkelig zueinander ausgerichtet sind.

Die Endabschnitte der Rohrwandungen sind dabei zur Ausbildung der Rohrverbindung günstigerweise ineinander gesteckt und in einem inneren Verbindungsbereich und einem äußeren Verbindungsbereich direkt miteinander verschmolzen.

Beim Verschmelzen von Kunststoffen werden die zu verbindenden Kunststoffteile an den zusammenzufügenden Oberflächen so hoch erwärmt, dass diese plastisch verformbar sind. Durch das Ausüben einer Anpresskraft über eine vorbestimmte Zeit kommt es zur Verbindung bzw. Verwicklung der Molekülketten der zu fügenden Kunststoffteile, sodass die Kunststoffteile im abgekühlten Zustand miteinander stoffschlüssig durch Verschmelzen miteinander verbunden sind. Das Verschmelzen der Endabschnitte der Rohrwandungen könnte durch ein Verschweißen der Endabschnitte erfolgen.

Die radiale Richtung bezieht sich auf eine virtuelle Längsachse der Rohrverbindung. Im Rahmen dieser Schrift bezeichnet die radiale Richtung eine Richtung, welche von einem von der Rohrverbindung umgebenen Innenhohlraum radial nach außen gerichtet ist. Die Längsachse ist günstigerweise eine Symmetrieachse der Rohrverbindung. Vorzugsweise ist die Längsachse parallel zur einer Strömungsrichtung eines durch die Rohrverbindung hindurchleitbaren Fluids ausgerichtet. Die Begriffe innen und außen beziehen sich auf die radiale Richtung. Innen ist näher an der Längsachse der Rohrverbindung als außen. Der innere Verbindungsbereich ist in anderen Worten näher an der Längsachse der Rohrverbindung angeordnet als der äußere Verbindungsbereich der Rohrverbindung.

Im Rahmen dieser Schrift sind mit der winkeligen Ausrichtung des inneren Verbindungsbereichs und des äußeren Verbindungsbereichs Ausführungen gemeint, bei denen der innere Verbindungsbereich und der äußere Verbindungsbereich, im Längsschnitt durch die Rohrverbindung gesehen, nicht auf einer gemeinsamen Gerade liegend angeordnet sind. Der innere Verbindungsbereich und der äußere Verbindungsbereich können, im genannten Längsschnitt gesehen, stumpfwinkelig oder spitzwinkelig zueinander ausgerichtet sein. Es ist auch denkbar und möglich, dass der innere Verbindungsbereich und der äußere Verbindungsbereich, im genannten Längsschnitt gesehen, einen gebogenen Übergang aufweisen. Durch die winkelige Ausrichtung des inneren Verbindungsbereichs und des äußeren Verbindungsbereich kann die Wandstärke der Rohre ohne Stabilitätsverluste gegenüber dem Stand der Technik verringert werden.

Die erfindungsgemäße Rohrverbindung bezieht sich auf Rohre aus Kunststoff-Monomaterial, d.h. Rohre, welche aus einem, insbesondere demselben, sortenreinen Kunststoff bestehen. Günstigerweise bestehen die Rohre aus einem Thermoplast. Beispiele für geeignete Thermoplaste sind z.B. Polyethylen, Polypropylen und Polybuten. Bevorzugt bestehen die Rohre der Rohrverbindung aus demselben Kunststoff-Monomaterial.

In bevorzugten Ausgestaltungsformen ist vorgesehen, dass der innere Verbindungsbereich Stirnflächen der Endabschnitte miteinander durch Verschmelzen verbindet, wobei, im Längsschnitt durch die Rohrverbindung gesehen, die Stirnfläche des jeweiligen Endabschnitts in einem Winkelbereich von 90° +/- 45°, vorzugsweise orthogonal, in Bezug auf eine Rohrinnenseite des jeweiligen Endabschnitts ausgerichtet ist. Bei einer orthogonalen Ausrichtung der Stirnflächen der Endabschnitte ist auch der durch Verschmelzen ausgebildete innere Verbindungsbereich orthogonal in Bezug auf die Rohrinnenseite der Endabschnitte ausgerichtet, wobei der innere Verbindungsbereich, in Richtung der Längsachse gesehen, kreisringförmig ausgebildet ist. In anderen Ausgestaltungsformen, bei denen die Stirnflächen der Endabschnitte in einem von der orthogonalen Richtung abweichenden Winkel gegenüber der jeweiligen Rohrinnenseite ausgerichtet sind, kann der innere Verbindungsbereich kegelstumpfmantelförmig ausgebildet sein.

Die Rohrinnenseite des jeweiligen Endabschnitts verläuft im zusammengefügten Zustand zur Ausbildung der Rohrverbindung, in einem Längsschnitt durch die Rohrverbindung gesehen, günstigerweise parallel zur Längsachse der Rohrverbindung.

Vorzugsweise ist vorgesehen, dass der äußere Verbindungsbereich Mantelflächen der Endabschnitte miteinander durch Verschmelzen verbindet, wobei, im Längsschnitt durch die Rohrverbindung gesehen, die Mantelfläche des jeweiligen Endabschnitts in einem Winkelbereich von 0° +/- 45° in Bezug auf die Rohrinnenseite des jeweiligen Endabschnitts ausgerichtet ist. Bei einer Ausrichtung der Mantelflächen unter einem Winkel von 0° in Bezug auf die Rohrinnenseite verlaufen die Mantelfläche und die Rohrinnenseite, im Längsschnitt durch die Rohrverbindung gesehen, parallel. Die Mantelflächen bzw. der äußere Verbindungsbereich der Rohrverbindung sind dann kreiszylindermantelförmig ausgebildet. Sind die Mantelflächen unter einem von 0° abweichenden Winkel in Bezug zur Rohrinnenseite ausgerichtet, d.h. als kegelstumpfmantelförmige Mantelflächen ausgebildet, so sind diese im zusammengefügten, miteinander verbundenen Zustand zur Ausbildung der Rohrverbindung durch einen kegelstumpfmantelförmigen äußeren Verbindungsbereich miteinander verbunden.

Gemäß der Erfindung ist vorgesehen, dass die Rohrverbindung zumindest einen Materialaufnahmeraum zur Aufnahme von überschüssigem aufgeschmolzenem, aus dem inneren Verbindungsbereich und/oder dem äußeren Verbindungsbereich ausgetriebenem Kunststoff aufweist. Beim Zusammenfügen von Endabschnitten von Rohren zur Ausbildung der Rohrverbindung durch Verschmelzen wird aus dem Verbindungsbereich überschüssiger aufgeschmolzener Kunststoff ausgetrieben. Der ausgetriebene Kunststoff weist eine geringere Tragfähigkeit auf als die Verbindungsbereiche der Rohrverbindung. Der aus den Verbindungsbereichen ausgetriebene Kunststoff weist häufig Schmutz oder Verunreinigungen, z.B. von einer vor dem Zusammenfügen der Endabschnitte an der Oberfläche der Rohrwandungen befindlichen Oxidschicht, auf. Der zumindest eine Materialaufnahmeraum ermöglicht die Aufnahme des überschüssigen aufgeschmolzenen Kunststoffs an einem definierten Ort der Rohrverbindung.

Vorzugsweise schließt der Materialaufnahmeraum unmittelbar an zumindest einen der Verbindungsbereiche an und ist zu diesem hin offen. Der Materialaufnahmeraum ist somit vor Herstellung der Rohrverbindung ein Hohlraum bzw. eine Materialaussparung in zumindest einem der miteinander zu verbindenden Endabschnitte, wobei der Materialaufnahmeraum dazu bestimmt ist, dass er beim Verbinden verlagertes aufgeschmolzenes Material aus einem oder beiden Verbindungsbereichen aufnimmt und damit ganz oder teilweise gefüllt wird.

Erfindungsgemäß ist der zumindest eine Materialaufnahmeraum von einer an zumindest einem der Endabschnitte ausgebildeten ringförmigen Nut begrenzt. Die Nut könnte auch als radialer oder axialer Einstich an zumindest einem der Endabschnitt ausgebildet sein. Die Nut kann, in einem Längsschnitt durch die Rohrverbindung gesehen, zu einer Seite hin offen ausgebildet sein. Im Rahmen dieser Schrift kann eine Nut, in einem Längsschnitt durch die Rohrverbindung gesehen, auch zu zwei Seiten hin offen ausgebildet sein.

Der Querschnitt der ringförmigen Nut kann in einem Längsschnitt durch die Rohrverbindung gesehen, einen kreisabschnittsförmigen Querschnitt oder einen beliebigen anderen Querschnitt aufweisen. In bevorzugten Ausgestaltungsformen der Erfindung ist vorgesehen, dass die ringförmige Nut, in einem Längsschnitt durch die Rohrverbindung gesehen, einen rechteckförmigen Querschnitt aufweist.

In vorteilhaften Ausgestaltungsformen ist vorgesehen, dass der Materialaufnahmeraum der Rohrverbindung ein, bezogen auf die radiale Richtung, innerer Materialaufnahmeraum zur Aufnahme von aus dem inneren Verbindungsbereich ausgetriebenem Kunststoff ist. Bevorzugt ist dabei vorgesehen, dass der innere Materialaufnahmeraum in einem an den inneren Verbindungsbereich nach innen angrenzenden Bereich der Rohrverbindung angeordnet ist. Dadurch kann verhindert werden, dass aus dem inneren Verbindungsbereich ausgetriebener Kunststoff den Öffnungsquerschnitt der Rohrverbindung verringert bzw. den Durchfluss des Fluid an der Stoßstelle der miteinander verschmolzenen Rohre behindert.

Vorzugsweise kann vorgesehen sein, dass der Materialaufnahmeraum der Rohrverbindung ein zentraler Materialaufnahmeraum ist, welcher in einem Bereich zwischen dem inneren Verbindungsbereich und dem äußeren Verbindungsbereich der Rohrverbindung zur Aufnahme von aus dem inneren Verbindungsbereich und/oder äußeren Verbindungsbereich ausgetriebenem Kunststoff angeordnet ist. Der zentrale Materialaufnahmeraum kann anstatt oder zusätzlich zum inneren Materialaufnahmeraum der Rohrverbindung vorgesehen sein.

Besonders bevorzugt ist vorgesehen, dass der zentrale Materialaufnahmeraum direkt an den inneren Verbindungsbereich und/oder an den äußeren Verbindungsbereich angrenzt. Dadurch kann aus dem inneren Verbindungsbereich und/oder aus dem äußeren Verbindungsbereich ausfließender Kunststoff in einem direkt an den jeweiligen Verbindungsbereich angrenzenden und zu diesem oder diesen hin offenen zentralen Materialaufnahmeraum aufgenommen werden.

Bei bestimmten Ausgestaltungsformen der Erfindung kann vorteilhafterweise vorgesehen sein, dass die Rohrverbindung zumindest eine Stützmanschette zur Formstabilisierung zumindest eines der Endabschnitte der Rohrwandungen aufweist. Dadurch kann die Dicke der Rohrwandung weiter verringert werden. Besonders in Fällen, in denen der äußere Verbindungsbereich kegelstumpfmantelförmig ausgebildet ist, kann dadurch das Ausweiten eines weiblich ausgebildeten Endabschnitts beim Zusammenfügen der Rohre verhindert werden. Günstigerweise ist die Stützmanschette außenliegend an zumindest einem der Endabschnitte der Rohrwandungen angeordnet. Vorzugsweise umfasst die Stützmanschette die miteinander verbundenen Endabschnitte der Rohrverbindung von außen.

Bei vorteilhaften Ausgestaltungsformen, insbesondere bei solchen mit Stützmanschette, weisen die Rohrwandungen der Rohre zumindest im Bereich der jeweiligen Endabschnitte denselben Außendurchmesser auf.

Die erfindungsgemäße Rohrverbindung eignet sich nicht nur für gerade Rohre, sondern es können auch Rohrbögen oder winkelige Rohre miteinander verbunden werden. Auch Formstücke wie z.B. Kupplungsstücke, T-Stücke, Rohrabzweigungen, U-Rohre etc., können untereinander über rohrförmige Endabschnitte der Rohrwandungen der Formstücke und/oder mit an den jeweiligen rohrförmigen Endabschnitten der Formstücke anschließenden Rohren verbunden werden. All diese Teile werden in diesem Sinne als Rohr bezeichnet, wenn sie zumindest einen rohrförmigen Endabschnitt aufweisen. Im Bereich des jeweiligen Endabschnittes sind die Rohre bzw. die rohrförmigen Endabschnitte günstigerweise gerade ausgebildet, um so möglichst einfach ein Zusammenfügen der Endabschnitte der Rohrwandungen zu ermöglichen.

Weitere Merkmale und Einzelheiten bevorzugter Ausgestaltungsformen der Erfindung werden anhand der in den Figuren dargestellten Ausführungsbeispiele von erfindungsgemäßen Rohrverbindungen erläutert. Es zeigen:
Fig. 1 die Endabschnitte der Rohrwandungen zweier Rohre vor dem Zusammenfügen, zur Ausbildung eines ersten Ausführungsbeispiels einer Rohrverbindung, in einem Längsschnitt;
Fig. 2 die durch Zusammenfügen der Endabschnitte der Rohrwandungen der Rohre gemäß Fig. 1 ausgebildete erfindungsgemäße Rohrverbindung;
Fig. 3 das Detail A aus Fig. 2 in einer vergrößerten Darstellung;
Fig. 4 die Endabschnitte der Rohrwandungen zweier Rohre vor dem Zusammenfügen, zur Ausbildung eines zweiten Ausführungsbeispiels einer Rohrverbindung in einem Längsschnitt;
Fig. 5 die durch Zusammenfügen der Endabschnitte der Rohrwandungen der Rohre gemäß Fig. 4 ausgebildete erfindungsgemäße Rohrverbindung des zweiten Ausführungsbeispiels, und
Fig.6 das Detail B aus Fig. 5 in einer vergrößerten Darstellung;

Auf das Einzeichnen der Schraffur der beiden Rohre 10 und 20 wurde in den Schnittdarstellungen verzichtet, um die Figuren übersichtlicher zu gestalten.

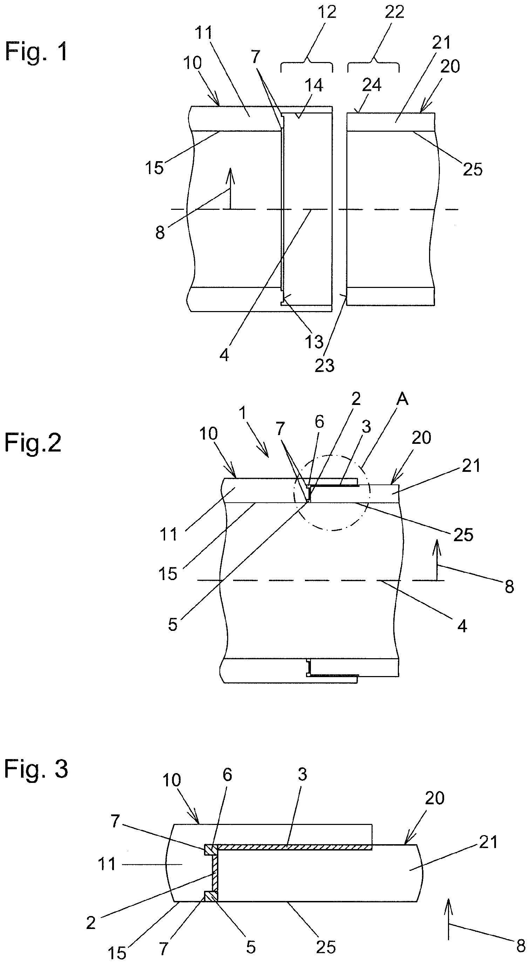

In den Figuren 1 bis 3 zum ersten Ausführungsbeispiel einer erfindungsgemäßen Rohrverbindung ist die Verbindung von Rohren 10, 20 mit kreisrundem Querschnitt gezeigt. Die jeweiligen Rohrwandungen 11, 21 bestehen aus demselben Kunststoff-Monomaterial. Im Ausführungsbeispiel handelt es sich beim Kunststoff-Monomaterial um ein Thermoplast, z.B. Polyethylen. Auch andere Thermoplaste oder Kunststoffe sind denkbar und möglich, wie dies bereits eingangs erläutert wurde.

Zur Ausbildung der in Fig. 2 gezeigten erfindungsgemäßen Rohrverbindung 1 sind die Endabschnitte 12, 22 der Rohrwandungen 11, 21 der Rohre 10, 20 unterschiedlich ausgestaltet. Der Endabschnitt 12 der Rohrwandung 11 ist als weiblicher Endabschnitt 12 ausgebildet, während der Endabschnitt 22 der Rohrwandung 21 des Rohres 20 als männlicher Endabschnitt 22 ausgebildet ist. Der Endabschnitt 12 der Rohrwandung 11 weist im ersten Ausführungsbeispiel einen größeren Außendurchmesser auf, als der Endabschnitt 22 der Rohrwandung 21. Die Außendurchmesser der Rohre 10, 20 können über die Längserstreckung des jeweiligen Rohrs 10, 20 variieren. Dies ist in den Figuren nicht gesondert dargestellt.

Die Rohre 10, 20 weisen günstigerweise denselben Rohrinnendurchmesser auf, wobei die Rohrinnenseiten 15, 25 der Rohre 10, 20 in der Regel direkt mit dem durch die Rohre 10, 20 leitbaren Fluid in Kontakt stehen.

Die Rohrachsen der Rohre 10, 20 sind in den Figuren nicht explizit bezeichnet und fallen im zusammengefügten bzw. verschmolzenen Zustand mit der Längsachse 4 der Rohrverbindung 1 zusammen, d.h. die Rohrachsen der Rohre 10, 20 und die Längsachse 4 der Rohrverbindung 1 verlaufen zumindest im Bereich der Rohrverbindung 1 koaxial.

Die Stirnflächen 13, 23 der Endabschnitte 12, 22 sind, im Längsschnitt durch die Rohrverbindung 1 gesehen, orthogonal in Bezug auf die Rohrinnenseiten 15, 25 des jeweiligen Endabschnitts 12, 22 ausgerichtet. Die Stirnflächen 13, 23 sind auch orthogonal in Bezug auf die Längsachse 4 der Rohrverbindung 1 ausgerichtet. Die Längsachse 4 ist eine virtuelle Achse, welche im Falle von kreiszylindrischen Rohren der Symmetrieachse der Rohrverbindung 1 entspricht, wie dies auch in den Figuren gezeigt ist.

Die Mantelflächen 14, 24 der Endabschnitte 12, 22 der Rohre 10, 20 liegen im ersten Ausführungsbeispiel parallel zur jeweiligen Rohrinnenseite 15, 25 und zur jeweiligen Rohrachse.

Zur Ausbildung der Rohrverbindung 1 werden die beiden Endabschnitte 12, 22 vor dem Zusammenfügen vorgewärmt, wobei das Kunststoff-Monomaterial im vorgewärmten Zustand plastisch verformbar ist. Der männliche Endabschnitt 22 wird zum Fügen der beiden Rohre 10, 20 in axialer Richtung entlang der Längsachse 4 in den weiblichen Endabschnitt 12 eingeführt, wobei ein innerer Verbindungsbereich 2 im zusammengefügten Zustand die Stirnflächen 13, 23 der Endabschnitte 12, 22 miteinander durch Verschmelzen verbindet. Ein äußerer Verbindungsbereich 3 verbindet die Mantelflächen 14, 24 der Endabschnitte 12, 22 miteinander durch Verschmelzen, sodass nach dem Erkalten des Kunststoff-Monomaterials in beiden Verbindungsbereichen eine dauerhafte, tragfähige und dichte Verbindung zwischen den Rohren 10 und 12 ausgebildet ist. Zur Vernetzung der Kunststoffmolekülketten der vorgewärmten Endabschnitte 12, 22 werden die Rohre 10, 20 durch eine entsprechende Anpresskraft beaufschlagt.

Der innere Verbindungsbereich 2 ist näher an der Längsachse 4 angeordnet, als der äußere Verbindungsbereich 3 der Rohrverbindung 1.

Beim Ausüben der zur Ausbildung der zum Verschmelzen bzw. Verschweißen nötigen Kraft wird aufgrund der plastischen Verformbarkeit des Kunststoff-Monomaterials überschüssiger aufgeschmolzener Kunststoff aus dem jeweiligen inneren Verbindungsbereich 2 und dem äußeren Verbindungsbereich 3 verdrängt. Zur Aufnahme des aus dem inneren Verbindungsbereich 2 und dem äußeren Verbindungsbereich 3 ausgetriebenen Kunststoffs weist die Rohrverbindung 1 des ersten Ausführungsbeispiels einen inneren Materialaufnahmeraum 5 und einen zentralen Materialaufnahmeraum 6 auf.

Häufig befinden sich Schmutzpartikel oder Oxidablagerungen an den zu fügenden Oberflächen, insbesondere auf den Stirnflächen 13, 23 und/oder den Mantelflächen 14, 24. Diese Schmutzpartikel oder Oxidablagerungen können durch das Ausüben der Kraft aus dem inneren Verbindungsbereich 2 und dem äußeren Verbindungsbereich 3 zusammen mit dem überschüssigen Kunststoff aus den Verbindungsbereichen 2, 3 ausgetrieben werden. Der innere Materialaufnahmeraum 5 und der zentrale Materialaufnahmeraum 6 ermöglichen eine gezielte Aufnahme der Schmutzpartikel bzw. Oxidablagerungen und des überschüssigen Kunststoffs.

Der innere Materialaufnahmeraum 5 ist zur Aufnahme von aus dem inneren Verbindungsbereich 2 ausgetriebenem Kunststoff, bezogen auf die radiale Richtung 8, in einem an den inneren Verbindungsbereich 2 nach innen angrenzenden Bereich der Rohrverbindung 1 angeordnet und bei der fertig hergestellten Rohrverbindung an drei Seiten von den Endabschnitten 12, 22 begrenzt. Dabei ist günstigerweise vorgesehen, dass das Volumen des aus dem inneren Verbindungsbereichs 2 ausgetriebenen Materials höchstens gleich groß ist wie das vom inneren Materialaufnahmeraum 5 bereitgestellte Aufnahmevolumen. In Fig. 2 ist der Idealfall dargestellt, bei dem der aus dem inneren Verbindungsbereich 2 in Richtung nach innen ausgetriebene Kunststoff den inneren Materialaufnahmeraum 5 vollständig ausfüllt aber nicht darüber hinaus steht. Der Übergang zwischen den Rohrinnenseiten 15, 25 der Rohre 10, 20 ist also günstigerweise über den gesamten Umfang der Innenseite der Rohrverbindung 1 glatt. Dadurch wird das Fluid, welches in den Rohren 10, 20 befördert wird, bei der Überleitung zwischen den Rohren 10,20 an der Stelle der Rohrverbindung 1 nicht gestört. Außerdem kann auf einen nach dem Verschmelzen unter Umständen erforderlichen Abtrag einer Wulst an der Rohrinnenseite verzichtet werden.

Der zentrale Materialaufnahmeraum 6 ist in einem Bereich zwischen dem inneren Verbindungsbereich 2 und dem äußeren Verbindungsbereich 3 der Rohrverbindung 1 zur Aufnahme von aus dem inneren Verbindungsbereich 2 und aus dem äußeren Verbindungsbereich 3 ausgetriebenem Kunststoff angeordnet. Der zentrale Materialaufnahmeraum 6 grenzt direkt an den inneren Verbindungsbereich 2 und den äußeren Verbindungsbereich 3 an und ist zu diesen hin offen.

Der innere Materialaufnahmeraum 5 und der zentrale Materialaufnahmeraum 6 sind jeweils von einer am Endabschnitt 12 ausgebildeten ringförmigen Nut 7 begrenzt. Die am Endabschnitt 12 angeordnete ringförmige Nut 7, welche den inneren Materialaufnahmeraum 5 begrenzt, d.h. die näher bei der Längsachse 4 liegende ringförmige Nut 7, ist, in einem Längsschnitt durch die Rohrverbindung 1 gesehen, zu zwei Seiten hin offen, vgl. Fig. 1. Die den zentralen Materialaufnahmeraum 6 begrenzende Nut 7 ist zu einer Seite hin offen ausgebildet. Die jeweiligen ringförmigen Nuten 7 bzw. der innere Materialaufnahmeraum 5 und der zentrale Materialaufnahmeraum 6 weisen, in einem Längsschnitt durch die Rohrverbindung 1 gesehen, einen rechteckförmigen Querschnitt auf. In anderen Ausgestaltungen könnte die ringförmige Nut auch einen halbkreisförmigen Querschnitt oder einen anderen geeigneten Querschnitt aufweisen.

Der innere Verbindungbereich 2 und der äußere Verbindungsbereich 3 sind im ersten Ausführungsbeispiel, im Längsschnitt gesehen, orthogonal zueinander ausgerichtet. Durch die winkelige Ausrichtung des inneren Verbindungsbereichs 2 und des äußeren Verbindungsbereichs 3 kann eine zuverlässige Verbindung der Rohre 10, 20 mit einem geringen Materialeinsatz und einer hohen Tragfähigkeit ohne Stabilitätsverlust der Rohrverbindung 1 erreicht werden. Die Wandstärke des weiblichen Endabschnitts 12 ist gegenüber dem Stand der Technik verringert, da durch den orthogonal auf die Längsachse 4 ausgerichteten inneren Verbindungsbereich 2 zusätzlich zum äußeren Verbindungsbereich 3 eine Verbindung der beiden Endabschnitte 12 und 22 geschaffen ist, welche zur Tragfähigkeit der Rohrverbindung 1 wesentlich beiträgt. Dies ist insbesondere bei unter Überdruck stehenden Fluiden vorteilhaft, da das Eindringen von Fluid bis zum äußeren Verbindungsbereich 3 durch das Vorsehen eines dichten inneren Verbindungsbereichs 2 verhindert werden kann. Insbesondere bei sehr langen Rohrleitungsanordnungen kann dadurch der Materialeinsatz beträchtlich reduziert werden. Insbesondere kann durch die erfindungsgemäße Rohrverbindung 1 auf zusätzliche mit der jeweiligen Rohraußenwand verschmolzene Schweißmuffen aus Kunststoff verzichtet werden.

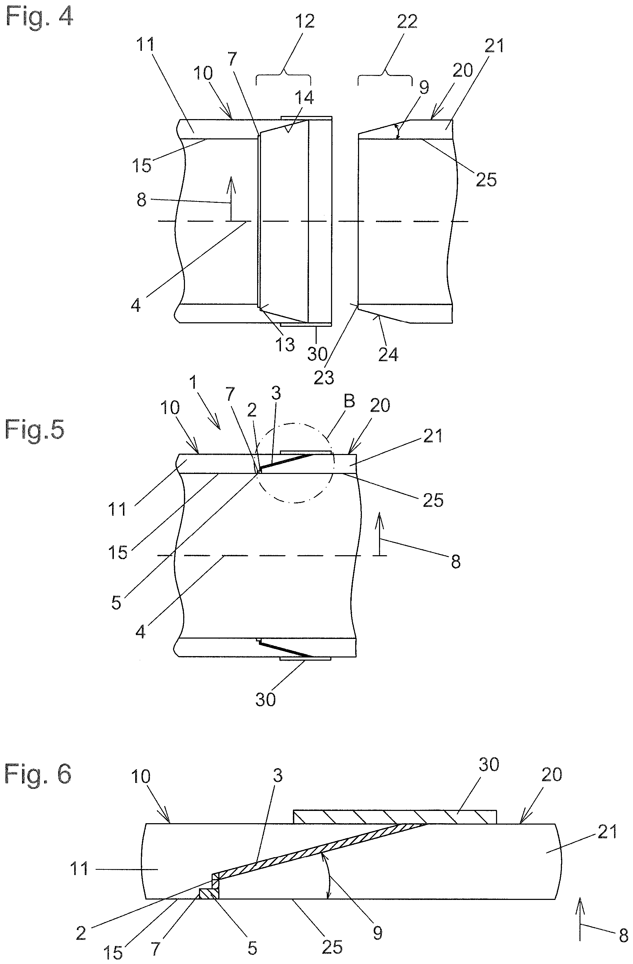

Das in den Fig. 4 bis 6 dargestellte zweite Ausführungsbeispiel einer Rohrverbindung 1 gemäß der Erfindung unterscheidet sich vom ersten Ausführungsbeispiel insbesondere hinsichtlich der Ausrichtung der Mantelflächen 14, 24 der Endabschnitte 12, 22 und der Verwendung einer Stützmanschette 30.

Außerdem weisen beide Rohre 10, 20, abgesehen von den Verbindungsbereichen 2 und 3, denselben Außendurchmesser auf.

Abgesehen von den noch im Folgenden zu erläuternden Unterschieden zum ersten Ausführungsbeispiel entspricht es jener des ersten Ausführungsbeispiels und es wird auf die Figurenbeschreibung zum ersten Ausführungsbeispiel verwiesen.

Die Mantelflächen 14, 24 der Endabschnitte 12, 22 sind im zweiten Ausführungsbeispiel, im Längsschnitt durch die Rohrverbindung 1 gesehen, in einem Winkel 9 von ca. 20° in Bezug auf die Rohrinnenseite 15, 25 des jeweiligen Endabschnitts 12, 22 ausgerichtet. Die Mantelflächen 14, 24 sind also kegelstumpfmantelförmig ausgebildet. Dies ist nur ein möglicher Winkelbereich hinsichtlich der Ausrichtung der Mantelflächen 14, 24. In anderen Ausgestaltungen der Erfindung könnten die Mantelflächen 14, 22 im Längsschnitt durch die Rohrverbindung 1 gesehen in einem Winkelbereich von 0° +/- 45° in Bezug auf die Rohrinnenseite 15, 25 des jeweiligen Endabschnitts 12, 22 ausgerichtet sein.

Zur Ausbildung der Rohrverbindung 1 verbindet der innere Verbindungsbereich 2 durch Verschmelzen die Stirnflächen 13, 23 der Endabschnitte 12, 22 miteinander. Die Mantelflächen 14, 24 der Endabschnitte 12, 22 sind im zusammengefügten Zustand in einem kegelstumpfmantelförmigen äußeren Verbindungsbereich 3 durch Verschmelzen miteinander verbunden, vgl. Fig. 5 und 6.

Beim zweiten Ausführungsbeispiel einer erfindungsgemäßen Rohrverbindung verhindert eine an der Außenseite der Rohrwandung 11 angeordnete Stützmanschette 30 ein Aufweiten insbesondere des weiblichen Endabschnitts 12, insbesondere beim Verbinden der Rohre 10 und 20 miteinander. Durch die kegelstumpfförmigen Mantelflächen 14, 24 entsteht beim Zusammenfügen der vorgewärmten und dadurch plastisch verformbaren Endabschnitte 12, 22 ein Keileffekt, welcher eventuell zu einer Deformation insbesondere des weiblich ausgebildeten Endabschnitt 12 führen könnte. Die Stützmanschette 30 besteht günstigerweise aus Metall und stabilisiert die Form der Endabschnitte 12, 22 der Rohrwandungen 11, 21 während des Fügeprozesses und, sofern sie dort belassen wird, auch anschließend.

Die Rohre 10, 20 der Rohrverbindung 1 weisen im zweiten Ausführungsbeispiel denselben Außendurchmesser auf. Dadurch kann eine sehr einfache Verbindung von glatten Rohren 10, 20 erreicht werden, welche vorzugsweise jeweils über ihre gesamte Längserstreckung einen konstanten Außendurchmesser aufweisen. Auch im zweiten Ausführungsbeispiel weisen die Rohre 10, 20 günstigerweise denselben Rohrinnendurchmesser auf.

Der Endabschnitt 12 des Rohres 10 weist im zweiten Ausführungsbeispiel nur eine, zu zwei Seiten hin offene, ringförmige Nut 7 auf, welche einen inneren Materialaufnahmeraum 5 zur Aufnahme von überschüssigem aufgeschmolzenem, aus dem inneren Verbindungsbereich 2 ausgetriebenem Kunststoff begrenzt. Der innere Materialaufnahmeraum 5 ist in einem an den inneren Verbindungsbereich 2 nach innen angrenzenden Bereich der Rohrverbindung 1 angeordnet und grenzt direkt an diesen an.

Im miteinander verbundenen Zustand der beiden Rohre 10, 20 entspricht der jeweilige Rohrinnendurchmesser günstigerweise dem kleinsten Durchflussquerschnitt im Bereich der Rohrverbindung 1, um Strömungsverluste beim Hindurchleiten von Fluid an der Stoß- bzw. Nahtstelle zu vermeiden. D. h., der aus dem inneren Verbindungsbereich 2 ausgetriebene aufgeschmolzene Kunststoff wird günstigerweise vollständig vom inneren Materialaufnahmeraum 5 aufgenommen, ohne nach innen überzustehen und dadurch den Durchfluss des Fluids zu behindern. Dies ist aber nicht zwingend so. In anderen Ausgestaltungen gemäß der Erfindung kann auch nur ein Teil des aus dem inneren Verbindungsbereich 2 ausgetriebenen aufgeschmolzenen Kunststoffs vom inneren Materialaufnahmeraum 5 aufgenommen sein. In weiteren Ausgestaltungen der Erfindung könnte der Materialaufnahmeraum 5 auch nur zum Teil mit überschüssigem aufgeschmolzenem Kunststoff gefüllt sein.

Es ist denkbar und möglich, dass die Rohrverbindung 1 mehr als zwei Materialaufnahmeräume 5, 6 aufweist, wobei günstigerweise immer zumindest ein innerer Materialaufnahmeraum 5 vorgesehen ist.

In den Ausführungsbeispielen sind jeweils kreisrunde Rohre 10, 20 durch die Rohrverbindung 1 miteinander verbunden. Es ist auch möglich, dass die Rohre 10, 20 einen vom kreisrunden Querschnitt abweichenden Querschnitt aufweisen.

Ein Rohr 10, 20 kann jeweils Endabschnitte 12, 22 desselben Typs aufweisen. Es ist beispielsweise möglich, ein als Rohr 10 ausgebildetes Kupplungsstück mit zwei weiblichen Endabschnitten 12 zur Verbindung mit zwei an das Kupplungsstück anschließenden Rohren 20 mit entsprechendem männlichen Endabschnitt 20 zu verwenden.

### Legende zu den Hinweisziffern:

- 1: Rohrverbindung
- 2: innerer Verbindungsbereich
- 3: äußerer Verbindungsbereich
- 4: Längsachse
- 5: innerer Materialaufnahmeraum
- 6: zentraler Materialaufnahmeraum
- 7: Nut
- 8: radiale Richtung
- 9: Winkel

- 10: Rohr
- 11: Rohrwandung
- 12: Endabschnitt
- 13: Stirnfläche
- 14: Mantelfläche
- 15: Rohrinnenseite

- 20: Rohr
- 21: Rohrwandung
- 22: Endabschnitt
- 23: Stirnfläche
- 24: Mantelfläche
- 25: Rohrinnenseite

- 30: Stützmanschette

## Patentansprüche

1. Rohrverbindung (1) mit zumindest zwei Rohren (10, 20) mit Rohrwandungen (11, 21) aus einem, insbesondere demselben, Kunststoff-Monomaterial, wobei ein Endabschnitt (12, 22) einer Rohrwandung (11, 21) eines der Rohre (10, 20) mit einem Endabschnitt (12, 22) einer Rohrwandung (11, 21) des anderen der Rohre (10, 20) durch Verschmelzen verbunden ist, wobei die Endabschnitte (11, 21), in radialer Richtung gesehen, in einem inneren Verbindungsbereich (2) und in einem äußeren Verbindungsbereich (3) der Rohrverbindung (1) direkt miteinander verschmolzen sind, wobei der innere Verbindungsbereich (2) und der äußere Verbindungsbereich (3), in einem Längsschnitt durch die Rohrverbindung (1) gesehen, winkelig zueinander ausgerichtet sind, **dadurch gekennzeichnet, dass** die Rohrverbindung (1) zumindest einen Materialaufnahmeraum zur Aufnahme von überschüssigem aufgeschmolzenem, aus dem inneren Verbindungsbereich (2) und/oder dem äußeren Verbindungsbereich (3) ausgetriebenem Kunststoff aufweist, wobei der Materialaufnahmeraum von einer an zumindest einem der Endabschnitte ausgebildeten ringförmigen Nut begrenzt ist.

2. Rohrverbindung (1) nach Anspruch 1, **dadurch gekennzeichnet, dass** der innere Verbindungsbereich (2) Stirnflächen (13, 23) der Endabschnitte (12, 22) miteinander durch Verschmelzen verbindet, wobei, im Längsschnitt durch die Rohrverbindung (1) gesehen, die Stirnfläche (13, 23) des jeweiligen Endabschnitts (12, 22) in einem Winkelbereich von 90° +/- 45°, vorzugsweise orthogonal, in Bezug auf eine Rohrinnenseite (15, 25) des jeweiligen Endabschnitts (12, 22) ausgerichtet ist und/oder der äußere Verbindungsbereich (3) Mantelflächen (14, 24) der Endabschnitte (12, 22) miteinander durch Verschmelzen verbindet, wobei, im Längsschnitt durch die Rohrverbindung (1) gesehen, die Mantelfläche (14, 24) des jeweiligen Endabschnitts (12, 22) in einem Winkelbereich von 0° +/- 45° in Bezug auf die Rohrinnenseite (15, 25) des jeweiligen Endabschnitts (12, 22) ausgerichtet ist.

3. Rohrverbindung (1) nach Anspruch 1 oder 2, **dadurch gekennzeichnet, dass** die ringförmige Nut (7), in einem Längsschnitt durch die Rohrverbindung (1) gesehen, einen rechteckförmigen Querschnitt aufweist.

4. Rohrverbindung (1) nach einem der Ansprüche 1 bis 3, **dadurch gekennzeichnet, dass** der Materialaufnahmeraum der Rohrverbindung (1) ein, bezogen auf die radiale Richtung (8), innerer Materialaufnahmeraum (5) zur Aufnahme von aus dem inneren Verbindungsbereich (2) ausgetriebenem Kunststoff ist, wobei vorzugsweise vorgesehen ist, dass der innere Materialaufnahmeraum (5) in einem an den inneren Verbindungsbereich (2) nach innen angrenzenden Bereich der Rohrverbindung (1) angeordnet ist.

5. Rohrverbindung (1) nach einem der Ansprüche 1 bis 3, **dadurch gekennzeichnet, dass** der Materialaufnahmeraum der Rohrverbindung (1) ein zentraler Materialaufnahmeraum (6) ist, welcher in einem Bereich zwischen dem inneren Verbindungsbereich (2) und dem äußeren Verbindungsbereich (3) der Rohrverbindung (1) zur Aufnahme von aus dem inneren Verbindungsbereich (2) und/oder äußeren Verbindungsbereich (3) ausgetriebenem Kunststoff angeordnet ist.

6. Rohrverbindung (1) nach Anspruch 5, **dadurch gekennzeichnet, dass** der zentrale Materialaufnahmeraum (6) direkt an den inneren Verbindungsbereich (2) und/oder an den äußeren Verbindungsbereich (3) angrenzt.

7. Rohrverbindung (1) nach einem der Ansprüche 1 bis 6, **dadurch gekennzeichnet, dass** die Rohrverbindung (1) zumindest eine Stützmanschette (30) zur Formstabilisierung zumindest eines der Endabschnitte (12, 22) der Rohrwandungen (11, 21) aufweist.

8. Rohrverbindung (1) nach Anspruch 7, **dadurch gekennzeichnet, dass** die Rohre (10, 20) denselben Außendurchmesser aufweisen.

## Claims

1. Pipe connection (1) with at least two pipes (10, 20) with pipe walls (11, 21) of a, in particular the same, plastic monomaterial, wherein an end section (12, 22) of a pipe wall (11, 21) of one of the tubes (10, 20) is connected with an end section (12, 22) of a pipe wall (11, 21) of the other pipe (10, 20) through fusion, wherein the end sections (11, 21), viewed in a radial direction, are directly fused together in an inner connecting region (2) and in an outer connecting region (3) of the pipe connection (1), wherein the inner connecting region (2) and the outer connecting region (3), viewed in a longitudinal section through the pipe connection (1), are oriented at an angle to one another, **characterised in that** the pipe connection (1) has at least one material reception space for receiving surplus molten plastic driven out of the inner connecting region (2) and/or the outer connecting region (3), wherein the material reception space is limited by an annular groove formed in at least one of the end sections.

2. Pipe connection (1) according to claim 1, **characterised in that** the inner connecting region (2) connects end faces (13, 23) of the end sections (12, 22) with one another through fusion, wherein, viewed in the longitudinal section through the pipe connection (1), the end face (13, 23) of the respective end section (12, 22) is oriented within an angular range of 90° +/- 45°, preferably orthogonally, in relation to a pipe inner side (15, 25) of the respective end section (12, 22) and/or the outer connecting region (3) connects outer surfaces {14, 24) of the end sections (12, 22) with one another through fusion, wherein, viewed in the longitudinal section through the pipe connection (1), the outer surface (14, 24) of the respective end section (12, 22) is oriented within an angular range of 0° +/- 45° in relation to the pipe inner side (15, 25) of the respective end section (12, 22).

3. Pipe connection (1) according to claim 1 or 2, **characterised in that** the annular groove (7) has a rectangular cross section, viewed in a longitudinal section through the pipe connection (1).

4. Pipe connection (1) according to claims 1 to 3, **characterised in that** the material reception space of the pipe connection (1) is an, in relation to the radial direction (8), inner material reception space (5) for receiving plastic driven out of the inner connecting region (2), wherein the inner material reception space (5) is preferably arranged in a region of the pipe connection (1) inwardly adjacent to the inner connecting region (2).

5. Pipe connection (1) according to claims 1 to 3, **characterised in that** the material reception space of the pipe connection (1) is a central material reception space (6) which is arranged in a region between the inner connecting region (2) and the outer connecting region (3) of the pipe connection (1) to receive plastic driven out of the inner connecting region (2) and/or outer connecting region (3).

6. Pipe connection (1) according to claim 5, **characterised in that** the central material reception space (6) is directly adjacent to the inner connecting region (2) and/or the outer connecting region (3).

7. Pipe connection (1) according to claims 1 to 6, **characterised in that** the pipe connection (1) has at least one supporting sleeve (30) for stabilising the form of at least one of the end sections (12, 22) of the pipe walls (11, 21).

8. Pipe connection (1) according to claim 7, **characterised in that** the pipes (10, 20) have the same outer diameter.

## Revendications

1. Raccord de tuyau (1) avec au moins deux tuyaux (10, 20) ayant des parois de tuyau (11, 21) réalisées en un monomatériau plastique, en particulier le même, une section d'extrémité (12, 22) d'une paroi de tuyau (11, 21) d'un des tuyaux (10, 20) étant reliée par fusion avec une section d'extrémité (12, 22) d'une paroi de tuyau (11, 21) de l'autre des tuyaux (10, 20), les sections d'extrémité (11, 21), vues en direction radiale, étant fusionnées directement ensemble dans une zone de raccord intérieure (2) et dans une zone de raccord extérieure (3) du raccord de tuyau (1), la zone de raccord intérieure (2) et la zone de raccord extérieure (3), vues en coupe longitudinale à travers le raccord de tuyau (1), étant orientées l'une par rapport à l'autre en faisant un angle, **caractérisée en ce que** le raccord de tuyau (1) est muni d'au moins un espace de réception de matière pour recevoir le plastique fusionné en excès expulsé de la zone de raccord intérieure (2) et/ou de la zone de raccord extérieure (3), l'espace de réception de matière étant délimité par une rainure annulaire (7) formée au niveau d'au moins une des sections d'extrémité.

2. Raccord de tuyau (1) selon la revendication 1, **caractérisé en ce que** la zone de raccord intérieure (2) relie ensemble par fusion des faces frontales (13, 23) des sections d'extrémité (12, 22), la face frontale (13, 23) de chaque section d'extrémité (12, 22), vue en coupe longitudinale à travers le raccord de tuyau (1), étant orientée dans une plage angulaire de 90° +/- 45°, de préférence de façon orthogonale, par rapport à une face intérieure de tuyau (15, 25) de la section d'extrémité (12, 22) considérée, et/ou la zone de raccord extérieure (3) relie ensemble par fusion des surfaces d'enveloppe (14, 24) des sections d'extrémité (12, 22), la surface d'enveloppe (14, 24) de la section d'extrémité (12, 22) considérée, vue en coupe longitudinale à travers le raccord de tuyau (1), étant orientée dans une plage angulaire de 0° +/- 45° par rapport à une face intérieure du tuyau (15, 25) de la section d'extrémité (12, 22) considérée.

3. Raccord de tuyau (1) selon la revendication 1 ou 2, **caractérisé en ce que** la rainure annulaire (7), vue en coupe longitudinale à travers le raccord de tuyau (1), présente une section rectangulaire.

4. Raccord de tuyau (1) selon l'une des revendications 1 à 3, **caractérisé en ce que** l'espace de réception de matière du raccord de tuyau (1) est, par rapport à la direction radiale (8), un espace intérieur de réception de matière (5) pour recevoir le plastique expulsé de la zone de raccord intérieure (2), l'espace intérieur de réception de matière (5) étant de préférence disposé dans une zone du raccord de tuyau (1) adjacente vers l'intérieur à la zone de raccord intérieur (2).

5. Raccord de tuyau (1) selon l'une des revendications 1 à 3, **caractérisé en ce que** l'espace de réception de matière du raccord de tuyau (1) est un espace central de réception de matière (6) qui est disposé, pour recevoir le plastique expulsé de la zone de raccord intérieure (2) et/ou extérieure (3), dans une zone située entre la zone de raccord intérieure (2) et la zone de raccord extérieure (3) du raccord de tuyau (1).

6. Raccord de tuyau (1) selon la revendication 5, **caractérisé en ce que** l'espace central de réception de matière (6) est directement adjacent à la zone de raccord intérieure (2) et/ou à la zone de raccord extérieure (3).

7. Raccord de tuyau (1) selon l'une des revendications 1 à 6, **caractérisé en ce que** le raccord de tuyau (1) est muni d'au moins un manchon de support (30) pour la stabilisation dimensionnelle d'au moins une des sections d'extrémité (12, 22) des parois de tuyau(11, 21).

8. Raccord de tuyaux (1) selon la revendication 7, **caractérisé en ce que** les tuyaux (10, 20) ont le même diamètre extérieur.
